Europäisches Patentamt

European Patent Office

Office européen des brevets

(11) Veröffentlichungsnummer : **0 167 517**
**B1**

## (12) EUROPÄISCHE PATENTSCHRIFT

(45) Veröffentlichungstag der Patentschrift :
26.04.89

(21) Anmeldenummer : 85890124.2

(22) Anmeldetag : 04.06.85

(51) Int. Cl.⁴ : **H 01 M 10/36, H 01 M 2/40**

(54) Galvanisches Element.

(30) Priorität : 06.06.84 AT 1858/84

(43) Veröffentlichungstag der Anmeldung :
08.01.86 Patentblatt 86/02

(45) Bekanntmachung des Hinweises auf die Patenterteilung : 26.04.89 Patentblatt 89/17

(84) Benannte Vertragsstaaten :
BE CH DE FR GB IT LI LU NL SE

(56) Entgegenhaltungen :
EP-A- 0 091 520
AT-B- 363 534

(73) Patentinhaber : **S.E.A. Studiengesellschaft für Energiespeicher und Antriebssysteme Gesellschaft
m.b.H.
Bleckmanngasse 10 Postfach 49
A-8680 Mürzzuschlag (AT)**

(72) Erfinder : **Tomazic, Gerd, Dr.
Hofkirchergasse 4
A-8680 Mürzzuschlag (AT)**

## Beschreibung

Die Erfindung bezieht sich auf ein galvanisches Element, insbesondere Sekundärelement, z. B. wiederaufladbares Zink-Brom-Element.

Obwohl die Anzahl der verschiedenen galvanischen Elemente sehr hoch ist, haben sich für die einzelnen Zwecke ganz bestimmte galvanische Elemente seit Jahren bzw. Jahrzehnten bewährt, wodurch eine besonders hohe Anpassung an die einzelnen spezifischen Zwecke gegeben ist. Der wiederaufladbare Blei-Akkumulator weist zwar ein relativ hohes Gewicht auf, wobei der Elektrolyt Schwefelsäure durchaus hohe Ansprüche an das Material und an das Wartungspersonal stellt, jedoch ist ein Bleisammler für die kurzzeitige Zurverfügungstellung von elektrischer Energie, wie beispielsweise zum Starten eines Verbrennungsmotors, so gut weiterentwickelt, daß seine Nachteile nicht mehr beachtet werden, und als Selbstverständlichkeit berücksichtigt werden. Gleiche Ausführungen gelten, z. B. für Edinson-Element und dgl.

Ein besonders leistungsfähiges Element kann durch die Kombination Zink-Brom erhalten werden, wobei der Elektrolyt umgepumpt wird. Die Kapazität eines derartigen galvanischen Elementes liegt sowohl in der Menge Zink, die aus den Elektrolyten niedergeschlagen werden kann, als auch in der Brommenge, die im Elektrolyten angesammelt werden kann. Zur Vermeidung von Selbstentladungen soll anderseits die Konzentration des Broms im Elektrolyten niedrig gehalten werden, was durch Einsatz von Komplexbildnern im Elektrolyten erreicht werden kann. Besonders vorteilhaft ist es, wenn dieser Komplexbildner mit Brom einen im wäßrigen Elektrolyten im wesentlichen unlöslichen Komplex bildet und die Dissoziierung lediglich so stark ist, daß das gewünschte Bromangebot erreichbar ist.

Nachteilig bei den galvanischen Zellen mit einem Vorratsbehälter für den Elektrolyten ist, daß ein hoher Volumsbedarf pro Leistungseinheit gegeben ist, da bislang keine raumsparende Anordnung gefunden werden konnte. Die Erfindung hat sich zur Aufgabe gestellt, ein galvanisches Element zu schaffen, das eine hohe Leistungsdichte, und zwar nicht nur bezogen auf das Gesamtgewicht, sondern auch auf das Gesamtvolumen erlaubt, wobei gleichzeitig eine hohe Betriebssicherheit, z. B. durch Verhinderung von Kanalbildungen in den Elektrodenräumen, durch Undichtwerden der einzelnen Zellen und dgl. erreicht werden kann.

Gegenstand der Erfindung ist ein galvanisches Element, insbesondere wiederaufladbares Zink-Brom-Element mit umlaufendem Elektrolyten, mit einer Vielzahl von planen Elektroden und planen Separatoren, wobei die Separatoren und/oder die Elektroden zumindest im Bereich ihrer äußeren Ränder, gegebenenfalls unmittelbar miteinander flüssigkeitsdicht verbunden sind, wodurch Anoden- und Kathodenräume gebildet sind, die über Verteilerkanäle für den Elektrolyten miteinander und mit zumindest einem Vorratsbehälter für den Elektrolyten flüssigkeitsleitend verbunden sind, das dadurch gekennzeichnet ist, daß zumindest eine Wand des Vorratsbehälters parallel zu den Elektroden und Separatoren, die Elektroden und Separatoren kraftschlüssig abstützend an diese anschließend angeordnet ist. Durch eine derartige Bauweise wird erreicht, daß der Vorratsbehälter für den bzw. die Elektrolyt (en) an die Elektroden bzw. Separatoren anschließen kann, wobei gleichzeitig eine Wand des Behälters als Lager bzw.

Gegenlager für die Separatoren und Elektroden dient, sodaß diese gegeneinander gehalten werden können, wodurch der in den Zellen vorhandene Druck vollkommen kompensiert werden kann, womit ein Abdichten voll gewährleistet ist und weiters nur geringste Strömungswege für den Elektrolyten eingehalten werden, sodaß der Eigenverbrauch an Strom bei der Batterie sehr gering gehalten werden kann, womit erneut der Wirkungsgrad des galvanischen Elementes erhöht werden kann.

Bei einer besonderen Ausführungsform der Erfindung sind die Elektroden bipolar ausgebildet.

Bei einer weiteren Ausführungsform sind die Elektroden aus mit Kunststoff gebundenem Kohlenstoff aufgebaut.

Ist an beiden Enden des galvanischen Elementes je ein Vorratsbehälter, z. B. für die Kathoden- bzw. Anodenflüssigkeit angeordnet, so kann eine besonders plane Anordnung der Elektroden erreicht werden, wobei gleichzeitig eine besonders hohe Volumsersparnis gegeben ist.

Eine besonders vorteilhafte Abstützung, welche nur ein geringes Volumen und Gewicht verursacht, kann dann erreicht werden, wenn die Wand Versteifungselemente vorweist.

Sind die Versteifungselemente in Form von Rippen aufgebaut, so kann auch eine besonders günstige strömungstechnische Anordnung erreicht werden.

Im folgenden wird die Erfindung anhand der Zeichnungen näher erläutert.

Es zeigen Fig. 1 ein galvanisches Element mit Vorratsbehälter im Schrägriß, Fig. 2 zwei verschiedene Darstellungen einer Wand des Vorratsbehälters, Fig. 3 einen Ausschnitt der nebeneinander angeordneten Elektroden und Separatoren.

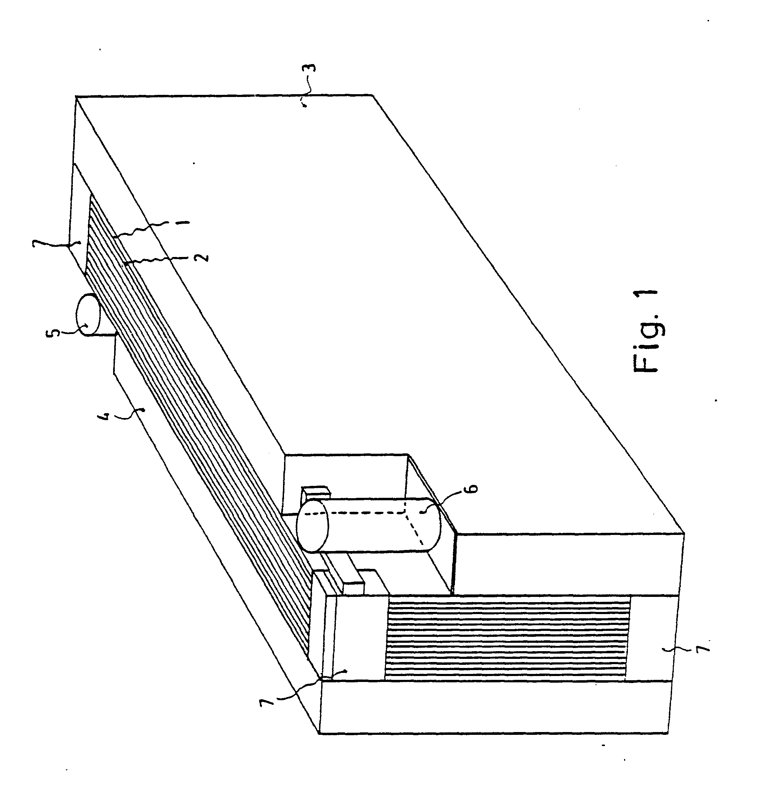

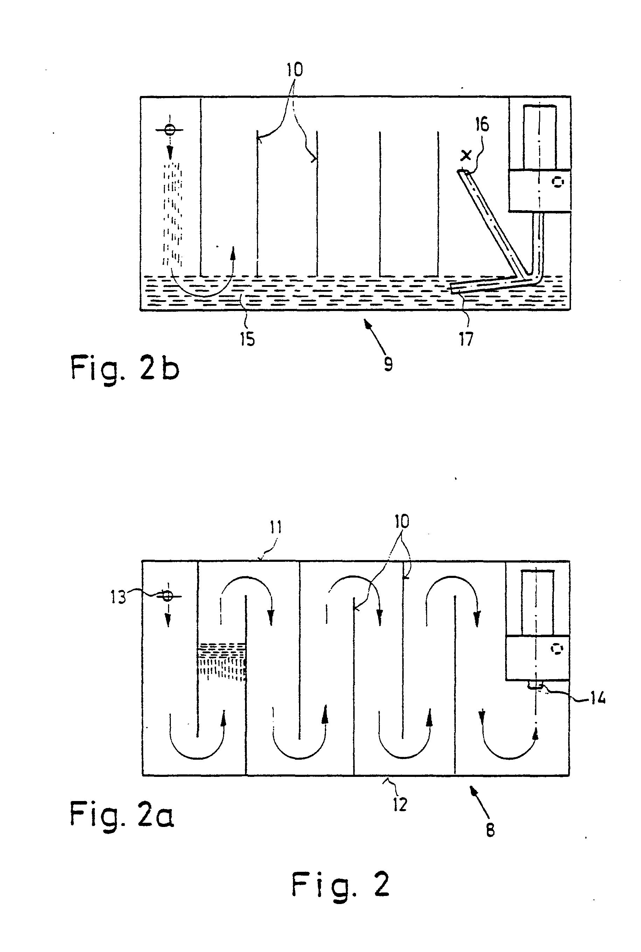

Bei dem in Fig. 1 dargestellten galvanischen Element ist eine Vielzahl von planen miteinander verschweißten Elektroden 1 und Separatoren 2 vorgesehen. Diese Elektroden und Separatoren sind in ihren Randbereichen bzw. Stirnseiten miteinander verschweißt und bestehen aus Polypropylen oder einem anderen chemisch resistenten Kunststoff. Zu beiden Seiten des Paketes aus Separatoren und Elektroden, die im wesentlichen eben ausgebildet sind, sind Vorratsbehälter 3, 4 für den Elektrolyten angeordnet. In die Vorratsbehälter tauchen Pumpen 5 und 6. An allen vier Eckbereichen ist bei dem Elektroden-Separator-Paket ein Verbinder 7 vorgesehen, welcher die Anoden- bzw. Kathodenräume und zwar jeweils zu- und abflußseitig miteinander verbindet. Die Behälter 3 und 4 schließen direkt mit einer Wand an das Elektroden-Separator-Paket an und stützen somit das flächige Paket ab, wodurch eine entsprechende Versteifung einerseits gegeben ist und anderseits ein planes Gegeneinanderdrücken und Verbinden erreichbar ist. Bei den in Fig. 2 dargestellten Wänden 8 und 9 sind Versteifungsrippen 10 vorgesehen, wobei die Versteifungsrippen gemäß Fig. 2a abwechselnd im oberen Bereich bzw. im unteren Bereich an die Abdeckung 11, 12 anstoßen, sodaß, da die Versteifungsrippen bis zur gegenüberliegenden Wand des Behälters reichen, ein Labyrinth erhalten wird, durch welches der Elektrolyt aus der Einflußöffnung 13 zur Abflußöffnung 14 in Form einer laminaren Strömung strömen kann. Damit wird erreicht, daß beim Laden möglichst unverbrauchter d. h. z. B. zinkreicher Elektrolyt angesaugt wird, wohingegen aus den Zellen der bereits an Zink verarmte Elektrolyt über die Öffnung 13 zurückgedrückt wird. Ein Vermischen und somit eine Verringerung der Konzentration kann auf diese Art und Weise verhindert werden.

Bei der in Fig. 2b vorgesehenen Wand 9 sind die Versteifungsrippen so angeordnet, daß im unteren Bereich ein freier Strömungskanal 15 erreicht wird. Hiemit kann beispielsweise bei einer Zink-Brom-Batterie, in welcher der Elektrolyt einen Komplexbildner aufweist, wobei der Bromkomplex nur eine geringere Löslichkeit in Wasser aufweist, erreicht werden, daß der in den Behältern eintretende Elektrolyt bis zum Boden geleitet werden muß, wobei gleichzeitig eine Separierung der beiden Flüssigkeiten eintreten kann. Durch die verschieden hoch angesetzten Ableitungen 16, 17 kann entweder die schwere Flüssigkeit oder die leichtere Flüssigkeit bzw. ein bestimmtes Gemisch beider abgesaugt werden. Die Versteifungsrippen haben weiters die Funktion, eine Verstärkung der Wand zu erreichen, wobei kein zusätzlicher Volumsbedarf gegeben ist.

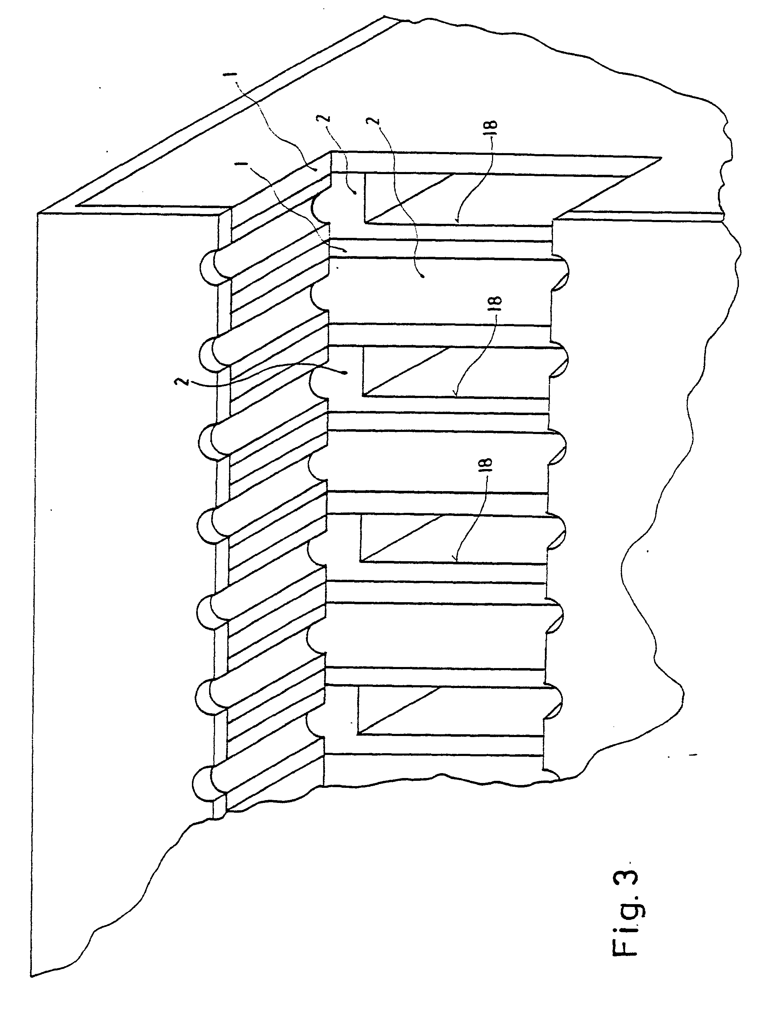

Bei dem in Fig. 3 dargestellten Paket aus Elektroden 1 und Separatoren 2 wurde der Verbinder 7 entnommen. Wie ersichtlich, weist jeder zweite Elektrodenraum, also der Anodenraum bzw. der Kathodenraum eine Zu- bzw. Ableitung 18 auf, die in den Verbinder 7 mündet. Die Elektroden 1 sind bipolar, sodaß die Anoden- und Kathodenräume jeweils durch die Elektrode getrennt sind. An die jeweils letzte Elektrode im Paket schließt sodann die Wand 8 bzw. die Wand 9 des Vorratsbehälters für den Elektrolyten an.

**Patentansprüche**

1. Galvanisches Element, insbesondere wiederaufladbares Zink-Brom-Element mit umlaufendem Elektrolyten, mit einer Vielzahl von planen Elektroden (1) und planen Separatoren (2), wobei die Separatoren (2) und/oder die planen Elektroden (1) zumindest im Bereich ihrer äußeren Ränder, gegebenenfalls unmittelbar, miteinander flüssigkeitsdicht verbunden, sind, wodurch Anoden- und Kathodenräume gebildet sind, die über Verteilerkanäle für den Elektrolyten miteinander und mit zumindest einem Vorratsbehälter (3, 4) für den Elektrolyten flüssigkeitsleitend verbunden sind, dadurch gekennzeichnet, daß zumindest eine Wand (8, 9) des Vorratsbehälters parallel zu den Elektroden (1) und Separatoren (2), die Elektroden (1) und Separatoren (2) kraftschlüssig abstützend an diese anschließend angeordnet ist.

2. Galvanisches Element nach Anspruch 1, bei dem die Elektroden (1) bipolar sind.

3. Galvanisches Element nach Anspruch 1 oder 2, bei dem die Elektroden (1) aus mit Kunststoff gebundenem Kohlenstoff aufgebaut sind.

4. Galvanisches Element nach Anspruch 1, 2 oder 3, dadurch gekennzeichnet, daß an den zwei gegenüberliegenden Seiten des galvanischen Elementes je ein Vorratsbehälter (3, 4) angeordnet ist.

5. Galvanisches Element nach einem der Ansprüche 1 bis 4, dadurch gekennzeichnet, daß zumindest eine Wand (8, 9) Versteifungselemente (10) aufweist.

6. Galvanisches Element nach Anspruch 5, dadurch gekennzeichnet, daß die Versteifungselemente (10) Rippen sind.

7. Galvanisches Element nach einem der Ansprüche 1 bis 6, dadurch gekennzeichnet, daß die Versteifungselemente (10) der Wand (8, 9) im wesentlichen bis zur gegenüberliegen den Wand des Vorratsbehälters (3, 4) reichen, und im unteren Bereich des Vorratsbehälters (3, 4) einen Strömungskanal (15) freilassen.

8. Galvanisches Element nach einem der Ansprüche 1 bis 6, dadurch gekennzeichnet, daß die Versteifungselemente (10) der Wand (8, 9) im wesentlichen bis zur gegenüberliegenden Wand des Vorratsbehälters (3, 4) reichen, und abwechselnd im unteren bzw. oberen Bereich des Vorratsbehälters (3, 4) anschließen.

**Claims**

1. A galvanic battery, especially a rechargeable battery of the zinc bromide type with a circulating electrolyte and having a plurality of flat electrodes (1) and flat separators (2), wherein the separators (2) and/or the flat electrodes (1) are secured to each other in a liquid-tight manner, directly if necessary and at least in the region of their outer edges, whereby to define anode zones and cathode zones which communicate with each other through electrolyte distribution channels, and which further communicate with at least one reservoir (3, 4) for controlling flow of the electrolyte, characterised in that at least one wall of the reservoir is arranged parallel to the electrodes (1) and separators (2), in clamping and supporting relationship therewith so as to secure the electrodes (1) and separators (2) together.

2. A galvanic battery according to Claim 1, in which the electrodes (1) are bi-polar.

3. A galvanic battery according to Claim 1 or Claim 2, wherein the electrodes (1) are made of carbon-reinforced plastics material.

4. A galvanic battery according to any one of Claims 1, 2 or 3, characterised in that one said reservoir (3, 4) is arranged on a respective one of the two opposite sides of the galvanic battery.

5. A galvanic battery according to any one of Claims 1 to 4, characterised in that at least one wall (8, 9) includes, stiffening elements (10).

6. A galvanic battery according to Claim 5, characterised in that the stiffening elements (10) are in the form of ribs.

7. A galvanic battery according to any one of Claims 1 to 6, characterised in that the stiffening elements (10) of the wall (8, 9) extend substantially up to the opposite wall of the reservoir (3, 4), with a flow channel left free in the lower portion of the reservoir (3, 4).

8. A galvanic battery according to any one of Claims 1 to 6, characterised in that the stiffening elements (10) of the wall (8, 9) extend substantially up to the opposite wall of the reservoir (3, 4) and communicate with each other alternately in the lower and the upper portions of the reservoir (3, 4).

**Revendications**

1. Elément galvanique, en particulier élément au zinc-brome rechargeable à circulation d'électrolyte, comprenant un grand nombre d'électrodes planes (1) et de séparateurs plans (2), les séparateurs (2) et/ou les électrodes planes (1), tout au moins dans la zone de leurs bords extérieurs, étant mutuellement raccordés, éventuellement directement, de façon étanche aux liquides en formant des chambres d'anodes et de cathodes qui communiquent entre elles par des canaux distributeurs d'électrolyte et avec au moins un réservoir (3, 4) contenant l'électrolyte, caractérisé par le fait qu'au moins une paroi (8, 9) du réservoir est disposée parallèlement aux électrodes (1) et aux séparateurs (2) et s'y raccorde en soutenant les électrodes (1) et les séparateurs (2) par une liaison par friction.

2. Elément galvanique selon la revendication 1, dans lequel les électrodes (1) sont bipolaires.

3. Elément galvanique selon la revendication 1 ou 2, dans lequel les électrodes (1) sont réalisées en carbone lié par une matière plastique.

4. Elément galvanique selon la revendication 1, 2 ou 3, caractérisé par le fait qu'un réservoir (3, 4) est respectivement disposé sur les deux côtés opposés de l'élément galvanique.

5. Elément galvanique selon l'une des revendications 1 à 4, caractérisé par le fait qu'au moins une paroi (5, 9) comporte des éléments de raidissement (10).

6. Elément galvanique selon la revendication 5, caractérisé par le fait que les éléments de raidissement (10) sont des nervures.

7. Elément galvanique selon l'une des revendications 1 à 6, caractérisé par le fait que les éléments de raidissement (10) de la paroi (8, 9) s'étendent sensiblement jusqu'à la paroi opposée du réservoir (3, 4) et laissent subsister un canal d'écoulement (15) dans la zone inférieure du réservoir (3, 4).

8. Elément galvanique selon l'une des revendications 1 à 6, caractérisé par le fait que les éléments de raidissement (10) de la paroi (8, 9) s'étendent sensiblement jusqu'à la paroi opposée du réservoir (3, 4) et se raccordent alternativement dans la zone inférieure et dans la zone supérieure du réservoir (3, 4).

Fig. 1

Fig. 2b

Fig. 2a

Fig. 2

2

Fig. 3